# DEMANDE DE BREVET EUROPEEN

(11) **EP 0 767 347 A1**
(43) Date de publication de la demande: **09.04.1997**
(21) Numéro de dépôt: 96402092.9
(22) Date de dépôt: 01.10.1996
(51) Int. Cl.: F24D 19/10, G05D 23/13

(54) **Dispositif de régulation de la température d'eau chaude sanitaire produite par un chauffe-bain**

(30) Priorité: 05.10.1995 FR 9511707
(71) Demandeur: SAUNIER DUVAL EAU CHAUDE CHAUFFAGE S.D.E.C.C. - Société anonyme, F-94120 Fontenay sous Bois (FR)
(72) Inventeur: de Lannoy, André, 75011 Paris (FR)
(74) Mandataire: Lhuillier, René

(57) **Abrégé**

On associe à la valve à eau (1) équipée d'un circuit (18) de bipasse de l'organe déprimogène (4) pour la correction de la température d'eau puisée en fontion de la température d'eau froide, un ensemble thermostatique (7,9) du genre d'un tiroir (11) déplaçable sous l'action d'une tige (14) à cire thermodilatable, qui joue le rôle de mitigeur thermostatique pour produire en puisage une eau chaude à température stable.

Application aux chauffe-bain.

## Description

L'invention se situe dans le domaine de la production d'eau chaude sanitaire par un chauffe-bain et concerne plus précisément un dispositif permettant de produire en sortie d'échangeur une eau à une température supérieure à la température de consigne puis à la ramener à cette valeur en mélangeant de l'eau froide à cette eau chaude.

Actuellement, pour obtenir ces différentes températures, les systèmes de régulation modulent la puissance du brûleur afin d'obtenir directement à la sortie de l'échangeur une température la plus proche possible de la température de consigne.

On connait ainsi un système de régulation proportionnelle où une variation de la puissance du brûleur est apportée en fonction du débit du puisage avec une correction possible par un bipasse. Mais ce système ne permet pas de définir de consigne de température, la température de l'eau en sortie étant fonction de la température de l'eau froide.

On peut aussi assurer une variation de la puissance apportée en fonction du débit d'eau demandé avec une modulation en fonction de la température de sortie, mais il se crée des oscillations lors des changements brusques de débit, dues au retard existant entre la variation de puissance suite à un écart de température, et l'observation de l'effet de cette variation de puissance.

Le dispositif de régulation de température selon l'invention apporte une solution intéressante à ces problèmes car il permet de définir une consigne en température, indépendante de la température d'eau froide en entrée.

Par rapport aux régulations modulées par la température en sortie d'échangeur, le dispositif supprime les fluctuations observées lors de changements de débit.

En outre les pics de températures dus à l'inertie de l'échangeur sont fortement atténués lors de puisages consécutifs.

L'invention a donc pour objet un dispositif de régulation de la température d'eau chaude sanitaire produite par un chauffe-bain comportant un dispositif permettant la correction de la température d'eau en sortie d'échangeur constitué d'un circuit de bipasse de l'organe déprimogène de la valve à eau, dispositif de régulation selon lequel on associe audit dispositif de correction de température un ensemble thermostatique du genre d'un tiroir déplaçable sous l'action d'une cire thermodilatable, connu en soi, qui joue le rôle de mitigeur thermostatique pour produire en puisage une eau chaude à température stable.

Selon une caractéristique particulière de l'invention, l'eau froide d'entrée est admise par un conduit d'arrivée dans une zone annulaire d'extrémité de la chambre interne du boîtier du mitigeur thermostatique, l'eau chaude provenant de l'échangeur est admise par un conduit d'entrée dans l'autre zone annulaire d'extrémité de ladite chambre, et le conduit de bipasse de l'organe déprimogène de la valve à eau du chauffe-bain débouche dans la chambre du coté du conduit d'arrivée d'eau froide.

D'autre part un clapet profilé, porté par une extrémité du tiroir du mitigeur thermostatique pénètre dans l'entrée du conduit de bipasse de l'organe déprimogène.

D'autres caractéristiques et avantages de l'invention ressortiront de la description qui va suivre d'un exemple de réalisation dans lequel on fait référence aux dessins annexés qui représentent :
Figure 1 une vue schématique du dispositif de régulation avec le mitigeur thermostatique
Figure 2 un schéma de fonctionnement du mitigeur à bipasse intégré.

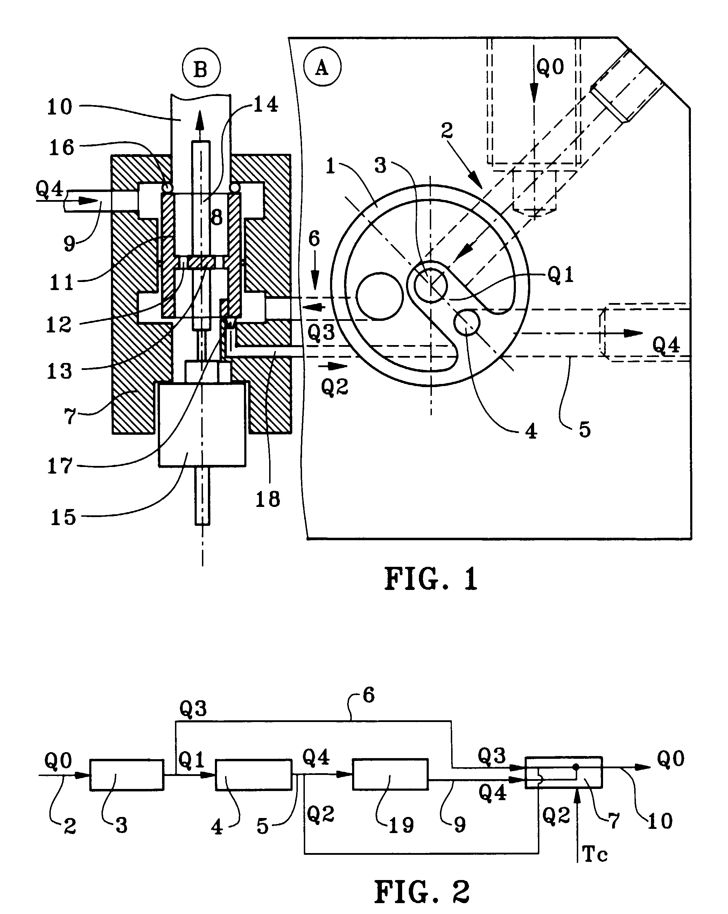

On a représenté schématiquement aux figures 1 et 2 le dispositif qui permet la régulation d'eau chaude sanitaire.

La partie droite (A) de la figure 1 est une vue en plan d'une valve à eau classique 1 au centre de laquelle débouche un conduit d'arrivée d'eau froide 2 à un piston régulateur 3. Le débit d'eau Q0 admis au piston régulateur se dirige selon un débit Q1 vers un organe déprimogène 4 puis par un conduit 5 vers l'échangeur de l'appareil. Une partie Q3 du débit Q0 de l'eau froide est dérivée avant le déprimogène par un conduit 6 vers un mitigeur thermostatique représenté plus en détail sur la partie gauche (B) de la figure 1.

Ce mitigeur est constitué d'un boîtier 7 ménageant une chambre interne 8 dans laquelle débouchent le conduit 6 d'arrivée d'eau froide, un conduit 9 d'entrée d'eau chaude qui alimente la chambre 8 à un débit Q4 correspondant au débit dans le conduit 5 et une canalisation 10 de sortie d'eau mitigée. Un tiroir de distribution 11 logé à l'intérieur de la chambre 8 coulisse dans celle-ci. Les extrémités du tiroir débordent plus ou moins sur les zones annulaires d'extrémité de la chambre où aboutissent les conduits d'eau froide et d'eau chaude. Des perforations 12 prévues dans une paroi centrale 13 du tiroir 11 permettent à l'eau froide du conduit 6 de passer du côté de l'entrée d'eau chaude 9 et de se mélanger à elle avant de sortir par la canalisation 10. A la paroi 13 est fixée une tige 14 en cire thermodilatable dont une extrémité est en appui contre une butée 15 rapportée sur le boîtier 7. Un ressort 16 tend à repousser ledit tiroir contre cette butée.

On notera qu'une extrémité du tiroir, du côté du conduit 6 d'arrivée d'eau froide est pourvue d'un clapet profilé 17 qui pénètre dans l'entrée d'un conduit 18 de dérivation d'eau froide à débit Q2 qui bipasse le déprimogène et rejoint l'échangeur.

En se référant à la figure 1, on comprend que lors d'un puisage d'eau chaude par la canalisation 10, il y aura mélange d'eau chaude et d'eau froide dans la chambre 8. Le ressort 16 a poussé le tiroir au maximum de telle sorte qu'il ferme les conduits 6 et 18. Toute l'eau froide provenant du conduit d'arrivée 2 passe par l'échangeur et l'eau chaude est admise dans la chambre 8. La tige 14 en cire thermodilatable provoque le déplacement du tiroir 11 et de ce fait l'ouverture de l'arrivée d'eau froide par le conduit 6 ainsi que l'ouverture partielle de conduit de dérivation 18.

En résumé, le déplacement du tiroir entraîne une réduction du débit d'eau chaude, une augmentation du débit d'eau froide, une diminution de la température d'eau chaude sanitaire par le bipasse et en fin de compte, une diminution de la température d'eau mitigée.

La régulation thermoproportionnelle schématisée à la figure 2 permet de définir une consigne de température Tc indépendante de la température d'entrée.

Le débit d'eau passant par le circuit de bipasse de l'organe déprimogène est régulé par un clapet profilé dont le déplacement est commandé directement par le tiroir déplaçable de l'ensemble thermostatique.

Le confort sanitaire s'en trouve nettement amélioré par rapport à un chauffe-bain à régulation proportionnelle simple et de plus cette solution évite d'avoir à installer de coûteux robinets thermostatiques à chaque point de puisage de la salle de bains.

Dans ces deux cas on a une grande stabilité de la température de l'eau puisée tout en limitant la puissance dans le corps de chauffe par une correction automatique de l'action de la régulation proportionnelle.

## Revendications

1. Dispositif de régulation de la température d'eau chaude sanitaire produite par un chauffe-bain comportant un dispositif permettant la correction de la température de sortie d'eau puisée en fonction de la température d'eau froide d'entrée qui, dans le cas d'un chauffe-bain est constitué d'un circuit de bipasse de l'organe déprimogène de la valve à eau caractérisé en ce qu'on associe audit dispositif de correction de température (4,18) un ensemble thermostatique (7,9) du genre d'un tiroir (11) déplaçable sous l'action d'une tige (14) à cire thermodilatable, connu en soi, qui joue le rôle de mitigeur thermostatique pour produire en puisage une eau chaude à température stable.

2. Dispositif de régulation selon la revendication 1 caractérisé en ce que l'eau froide d'entrée est admise par un conduit d'arrivée (6) dans une zone annulaire d'extrémité de la chambre interne (8) du boîtier (7) du mitigeur thermostatique, en ce que l'eau chaude provenant de l'échangeur est admise par un conduit d'entrée (9) dans l'autre zone annulaire d'extrémité de ladite chambre, et en ce que le conduit (18) de bipasse de l'organe déprimogène (4) de la valve à eau (1) du chauffe-bain débouche dans la chambre du côté du conduit d'arrivée d'eau froide.

3. Dispositif de régulation selon les revendications 1 et 2 caractérisé en ce qu'un clapet profilé (17) porté par une extrémité du tiroir (11) du mitigeur thermostatique, pénètre dans l'entrée du conduit (18) de bipasse de l'organe déprimogène.

4. Dispositif de régulation selon la revendication 1 caractérisé en ce que dans le cas d'un besoin d'eau à température élevée, toute l'eau froide passant par la valve à eau est distribuée à l'échangeur et restituée chaude à la canalisation de puisage sans mélange d'eau froide dans le mitigeur thermostatique.
